# EUROPEAN PATENT SPECIFICATION

(11) **EP 3 323 599 B1**
(45) Date of publication and mention of the grant of the patent: **19.06.2019**
(21) Application number: 16824437.4
(22) Date of filing: 11.07.2016
(51) Int. Cl.: B29C 67/00, B33Y 10/00, B33Y 30/00, B33Y 40/00, B29C 64/112, B29C 64/232, B29C 64/209, B29C 64/30, B29C 64/236, B29C 64/245

(54) **FORMING DEVICE AND FORMING METHOD**
FORMVORRICHTUNG UND FORMVERFAHREN
DISPOSITIF DE FORMATION ET PROCÉDÉ DE FORMATION

(30) Priority: 14.07.2015 JP 2015140764
(43) Date of publication of application: 23.05.2018
(73) Proprietor: Mimaki Engineering Co., Ltd., Tomi-City, Nagano 389-0512 (JP); Graphic Creation Co., Ltd., Tomi-city, Nagano 389-0512 (JP)
(72) Inventor: Hara Hirofumi, Tomi-city Nagano 389-0512 (JP)
(74) Representative: Horn Kleimann Waitzhofer Patentanwälte PartG mbB
(86) International application number: PCT/JP2016/070440
(87) International publication number: WO 2017/010457

(56) References cited:
- EP-A2- 2 599 613
- JP-A- 2010 052 330
- JP-A- 2013 067 118
- JP-A- 2013 067 119
- JP-A- 2013 067 121
- JP-A- 2015 168 112

## Description

### Technical Field

The present invention relates to a forming apparatus according to claim 1 and a forming method according to claim 7.

### Background Art

Conventionally, inkjet printers that print by inkjet scheme have been widely used (for example, Non-patent document 1). A method performed using an inkjet head (inkjet forming method) has been studied as a configuration of a forming apparatus (3D printer) for forming a three-dimensional object. In this case, for example, a plurality of layers of ink formed by the inkjet head are built one above the other to form a three-dimensional object by additive manufacturing. Patent document 2 discloses a three-dimensional shaping apparatus and method.

### RELATED ART DOCUMENTS

### NON-PATENT DOCUMENT

Non-patent document 1: Internet URL http://www.mimaki.co.jp
Patent document 2: EP2599613 A2

### Disclosure of the Invention

### Problems to be Solved by the Invention

When an object is formed using the inkjet head, ink droplets are ejected from minute nozzles to form a layer of ink. In this case, however, due to the principle of the inkjet head, the ejected ink droplet size may inevitably vary to some extent. Additionally, since the ink is liquid, the ink is affected by the surface tension. When a three-dimensional object is formed by additive manufacturing, a plurality of layers of ink are built one above the other. Thus, when the ink droplet size varies, the difference in the height of the deposited layers becomes significant after the deposition if the influence of the variation and the influence of the surface tension of the ink are not eliminated.

Therefore, when a three-dimensional object is formed using the inkjet head, each layer of ink is preferably flattened using, for example, a roller to form a layer of ink with a predetermined constant thickness. However, when the roller or a like member is used for flattening, in addition to simply using the roller, it is desirable to perform flattening with a configuration that takes into consideration of a problem that arises from the use of the roller. Accordingly, it is an object of the present invention to provide a forming apparatus and a forming method that solve the above-described problem.

### Means of Solving the Problems

The inventor of the present application conducted research and study on the configuration for forming an object by additive manufacturing using an inkjet head and for flattening using a roller. With this configuration, for example, layers of ink are formed by allowing the inkjet head to perform a main scanning operation and a sub-scanning operation. In the main scanning operation, the inkjet head ejects ink droplets while moving in a predetermined main scanning direction. In the sub-scanning operation, the inkjet head is moved in a sub-scanning direction orthogonal to the main scanning direction. During the main scanning operation, the roller is moved together with the inkjet head to flatten the layers of ink. With this configuration, each layer of ink is flattened to a predetermined thickness and is formed in a high accuracy.

However, in the actual forming apparatus, variation in, for example, the mechanical accuracy to some extent is inevitable. For example, the roller has variation (entire deviation) caused by various factors, which leads to variation in the accuracy of flattening to some extent. As a result, for example, the operation for forming an object may be hindered.

More specifically, for example, when each layer of ink is formed by the above-described operation, the layer of ink may be cured after flattening during the main scanning operation. Thus, at the point in time when the main scanning operation is completed, the layer of ink is cured in a thickness that allows the layer of ink to just contact the roller. In this case, if the accuracy of the roller is perfect, for example, the inkjet head and the roller can be moved without any particular problem in, for example, the following sub-scanning operation.

However, if there is an error in, for example, the accuracy of the roller, and a space between the upper surface of the layer of ink and the roller after flattening is tight, the roller and the upper surface of the layer of ink may possibly contact each other unnecessarily and hinder the operation during, for example, the sub-scanning operation and the subsequently performed main scanning operation. The state of the upper surface of the layer of ink may possibly be affected by the contact with the roller. As a result, the formation accuracy may be decreased.

Thus, the inventor of the present application considered, through further research and study, mounting the roller in a tilted state as described below in accordance with the direction of the movement (relative movement) during the sub-scanning operation. To solve the above-described problem, the present invention has the following configuration.

(Configuration 1) According to one aspect of the present invention, a forming apparatus for forming a three-dimensional object by additive manufacturing includes an inkjet head, a platform, a main scanning driver, a sub-scanning driver, a deposition direction driver, and a roller. The inkjet head is configured to eject an ink droplet by inkjet scheme. The platform includes a base member configured to support the three-dimensional object being formed. The platform is disposed at a position facing the inkjet head. The main scanning driver is configured to cause the inkjet head to perform a main scanning operation in which the inkjet head moves relative to the platform in a predetermined main scanning direction while ejecting an ink droplet. The sub-scanning driver is configured to cause the inkjet head to move relative to the platform in a sub-scanning direction orthogonal to the main scanning direction. The deposition direction driver is configured to change the distance between the inkjet head and the platform by moving at least one of the platform and the inkjet head. The roller is configured to flatten a layer of ink formed by the inkjet head by moving relative to the platform together with the inkjet head during the main scanning operation. In between the main scanning operations, the sub-scanning driver is configured to cause the inkjet head to perform a sub-scanning operation in which the inkjet head moves relative to the platform by a predetermined forwarding distance in a sub-scanning moving direction, which is a predetermined direction in the sub-scanning direction. During the sub-scanning operation, the roller is configured to move relative to the platform in the sub-scanning moving direction together with the inkjet head. The roller includes a first end on a forward end in the sub-scanning moving direction and a second end on a rearward end in the sub-scanning moving direction. The roller is disposed in a tilted manner such that the height in the deposition direction of the second end on the rearward end is higher than the height in the deposition direction of the first end on the forward end.

With this configuration, for example, since the roller is tilted such that the rearward end in the sub-scanning moving direction is higher, when the roller is moved in the sub-scanning moving direction, the roller automatically separates from the surface of the layer of ink. In this case, for example, even if there is an error in the accuracy of the roller to some extent, unnecessary contact between the upper surface of the layer of ink and the roller is avoided in a suitable manner. Thus, with this configuration, during the sub-scanning operation for example, the roller is more easily moved in a suitable manner. Thus, the layer of ink is flattened in a more suitable manner during, for example, formation of the three-dimensional object.

The first end and the second end of the roller refer to, for example, the first end and the second end of the part of the roller that performs flattening. Part of the roller that performs flattening refers to, for example, the position in the sub-scanning direction that matches with the array of nozzles of the inkjet head.

(Configuration 2) In the first aspect of the present invention, the inkjet head may include an array of nozzles including a plurality of nozzles disposed in a range having a width *Ln* in the sub-scanning direction. In the operation for forming one layer of ink, the forming apparatus may be configured to successively form a band region that is a band-like region having a width *Ln*/*n* obtained by dividing the width *Ln* in the sub-scanning direction by a predetermined integer *n* of one or more. In the operation for forming one layer of ink, the inkjet head may be configured to repeat the main scanning operation and the sub-scanning operation to successively form a layer of ink in each band region at a predetermined thickness along the sub-scanning moving direction. During the last main scanning operation for forming each band region in the operation for forming one layer of ink, with regard to a band being formed, which is the band region in which formation will be completed by the last main scanning operation, and a rearward band, which is the band region in which formation has been completed and is located rearward of the band being formed in the sub-scanning moving direction, the inkjet head may be configured to form a layer of ink such that, in a state before being flattened by the roller, the height of the ink on the rear end of the band being formed in the sub-scanning moving direction is higher than the front end of the rearward band, and the roller may be configured to flatten the layer of ink such that the height of the ink on the rear end of the band being formed in the sub-scanning moving direction does not become lower than at least the front end of the rearward band.

With this configuration, the rearward band refers to, for example, a band region adjacent to the band being formed. The completed band region refers to a band region in which a layer of ink having a thickness corresponding to one layer has already been formed.

With this configuration, for example, the layer of ink is formed in the band being formed to be higher than the rearward band at the boundary between the rearward band and the band being formed. Subsequently, the layer of ink is flattened not to be lower than the rearward band. With this configuration, for example, the layer of ink formed in the band being formed is flattened in a suitable manner.

In the forming apparatus, for example, due to an error in the forwarding distance during the sub-scanning operation, the roller may project onto the rearward band during the main scanning operation. In this respect, with the above configuration, even if the roller projects, the surface of the layer of ink in the rearward band and the roller do not contact each other. Thus, with this configuration, the layer of ink is flattened in a more suitable manner in this respect also.

In this case, for example, a roller having a length that partially projects onto the rearward band within a range that does not hinder the sub-scanning operation may be used from the beginning. This configuration allows for errors in, for example, the accuracy in mounting the roller and the operation accuracy.

With this configuration, when *n* = 1, the forming apparatus forms one layer of ink by, for example, a single-pass method in which the main scanning operation is performed once for each region. Alternatively, when *n* is two or more, the forming apparatus forms one layer of ink by, for example, a multi-pass method involving *n* passes in which the main scanning operation is performed *n* times for each region.

(Configuration 3) In the first aspect of the present invention, when an incomplete band region located forward of the band being formed in the sub-scanning moving direction is referred to as a forward band, the inkjet head may be configured to form a layer of ink such that, in a state before being flattened by the roller, the height of the ink on the front end of the band being formed in the sub-scanning moving direction is higher than the layer of ink already formed at a position on the rear end of the forward band, and the roller may be configured to flatten the layer of ink such that the height of the ink on the front end of the band being formed in the sub-scanning moving direction does not become lower than at least the layer of ink already formed at a position on the rear end of the forward band.

With this configuration, for example, at the boundary between the forward band and the band being formed, the layer of ink is formed in the band being formed to be higher than the layer of ink already formed at a position on the rear end of the forward band. Subsequently, the layer of ink is flattened not to be lower than the layer of ink at the position on the rear end of the forward band. Thus, with this configuration, for example, when the roller is moved in the sub-scanning moving direction, the roller automatically separates from the surface of the layer of ink in a more suitable manner. With this configuration, for example, the layer of ink is flattened in a more suitable manner.

In this case, for example, even if the roller projects onto the forward band during the main scanning operation, the roller does not contact the surface of the layer of ink already formed in the forward band. Thus, with this configuration, the layer of ink is flattened in a more suitable manner in this respect also.

With this configuration, the forward band refers to, for example, a band region that is adjacent to the band being formed. With this configuration, the incomplete band region refers to a band region in which a layer of ink having a thickness corresponding to one layer has not been formed. For example, when one layer of ink is formed by the single-pass method, the incomplete band region may refer to a region in which the main scanning operation for forming the one layer of ink has not been performed. In this case, the forward band may be a band region in which the layers of ink up to one layer below have been formed.

When one layer of ink is formed by the multi-pass method, the incomplete band region refers to a region in which the main scanning operations corresponding to the number of passes have not been performed. In this case, the forward band may be a band region in which the main scanning operations except the last main scanning operation have been performed on the layer of ink one layer below.

In this case, for example, a roller having a length that partially projects onto the forward band within a range that does not hinder the sub-scanning operation may be used from the beginning. This configuration allows for errors in, for example, the accuracy in mounting the roller and the operation accuracy.

(Configuration 4) In the first aspect of the present invention, the inkjet head may be configured to eject an ink droplet of ink curable under a predetermined condition. The forming apparatus may further include curing means configured to cure the ink. The roller may be configured to remove part of the ink before being cured to flatten the layer of ink formed by the inkjet head.

With this configuration, the layer of ink is formed and flattened in a more suitable manner. An ink curable under a predetermined condition may favorably be, for example, an ultraviolet curable ink (UV ink) that cures by exposure to ultraviolet light.

(Configuration 5) In the first aspect of the present invention, when the thickness of one layer of ink after being flattened is represented by *T*, and the difference in the height between the second end of the roller and the first end of the roller is represented by *H*, the relationship represented by *H < T* may be satisfied. In this case, the first end and the second end of the roller refer to the forward end and the rearward end of the roller in the sub-scanning moving direction. With this configuration, the roller is tilted in a more suitable manner. This further prevents, for example, the lower layer of ink located in the advancing direction of the roller and the roller from contacting each other in a more suitable manner during the sub-scanning operation.

(Configuration 6) In the first aspect of the present invention, when an entire deviation amount of the roller is represented by *X,* the relationship represented by *X < H < T - X* may be satisfied. As used herein, the entire deviation amount of the roller refers to, for example, the deviation amount of the roller that includes all the errors that occur on the roller. With this configuration, the roller is tilted in a more suitable manner in accordance with the thickness *T* of one layer of ink and the entire deviation amount *X* of the roller. Thus, for example, when the roller is moved in the sub-scanning moving direction, the roller automatically separates from the surface of the layer of ink in a more suitable manner, and the layer of ink is flattened in a more suitable manner.

The difference between the height of the second end of the roller and the height of the first end of the roller is preferably 20 µm or less. The difference in the height is preferably greater than the entire deviation amount *X* of the roller and equal to or less than 20 µm.

When the roller is mounted in a tilted manner, a step corresponding to the tilting of the roller is generated on the surface of the layer of ink after flattening. If the step is great, for example, an influence on the visual appearance of the three-dimensional object may possibly occur. In particular, if the step exceeds 20 µm, the influence on the appearance is increased. In contrast, with this configuration, for example, while reducing the influence on the visual appearance of the three-dimensional object, the roller is tilted in a suitable manner. Thus, for example, the layer of ink is flattened in a more suitable manner.

The difference between the height of the second end of the roller and the height of the first end of the roller is more preferably 5 µm or less. The difference in the height is preferably greater than the entire deviation amount *X* of the roller and equal to or less than 5 µm.

If the step generated in accordance with the tilting of the roller exceeds, for example, 5 µm, the influence on the sense of touch of the three-dimensional object is increased. In contrast, with this configuration, for example, while reducing the influence on the sense of touch of the three-dimensional object, the roller is tilted in a suitable manner. Thus, for example, the layer of ink is flattened in a more suitable manner.

(Configuration 7) According to another aspect of the present disclosure, a method for forming a three-dimensional object by additive manufacturing uses an inkjet head, a platform, and a roller. The inkjet head is configured to eject an ink droplet by inkjet scheme. The platform includes a base member configured to support the three-dimensional object being formed. The platform is disposed at a position facing the inkjet head. The roller is configured to flatten a layer of ink formed by the inkjet head. The method includes causing the inkjet head to perform a main scanning operation in which the inkjet head moves relative to the platform in a predetermined main scanning direction while ejecting an ink droplet. The inkjet head is moved relative to the platform in a sub-scanning direction orthogonal to the main scanning direction. The distance between the inkjet head and the platform is changed by moving at least one of the platform and the inkjet head. A layer of ink formed by the inkjet head is flattened by moving the roller relative to the platform together with the inkjet head during the main scanning operation. The inkjet head is caused to perform, in between the main scanning operations, a sub-scanning operation in which the inkjet head moves relative to the platform by a predetermined forwarding distance in a sub-scanning moving direction, which is a predetermined direction in the sub-scanning direction. The roller is caused to move relative to the platform in the sub-scanning moving direction together with the inkjet head during the sub-scanning operation. The roller includes a first end on a forward end in the sub-scanning moving direction and a second end on a rearward end in the sub-scanning moving direction. The roller is disposed in a tilted manner such that the height in the deposition direction of the second end on the rearward end is higher than the height in the deposition direction of the first end on the forward end. With this configuration, for example, the same advantages as the configuration 1 are obtained.

### Effects of the Invention

According to the present invention, during formation of a three-dimensional object, a layer of ink is flattened in a more suitable manner.

### Brief Description of the Drawings

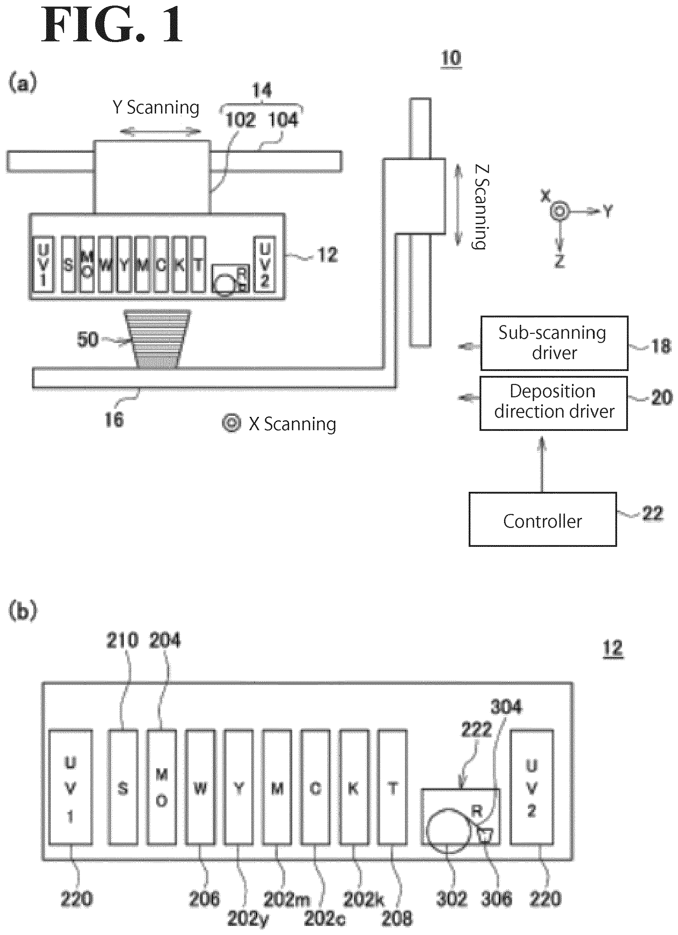

FIG.1 is a diagram illustrating an exemplary forming apparatus 10 according to one embodiment of the present invention. FIG. 1(a) illustrates an exemplary configuration of main elements of the forming apparatus 10. FIG. 1(b) illustrates an exemplary configuration of the ejection unit 12 in more detail.

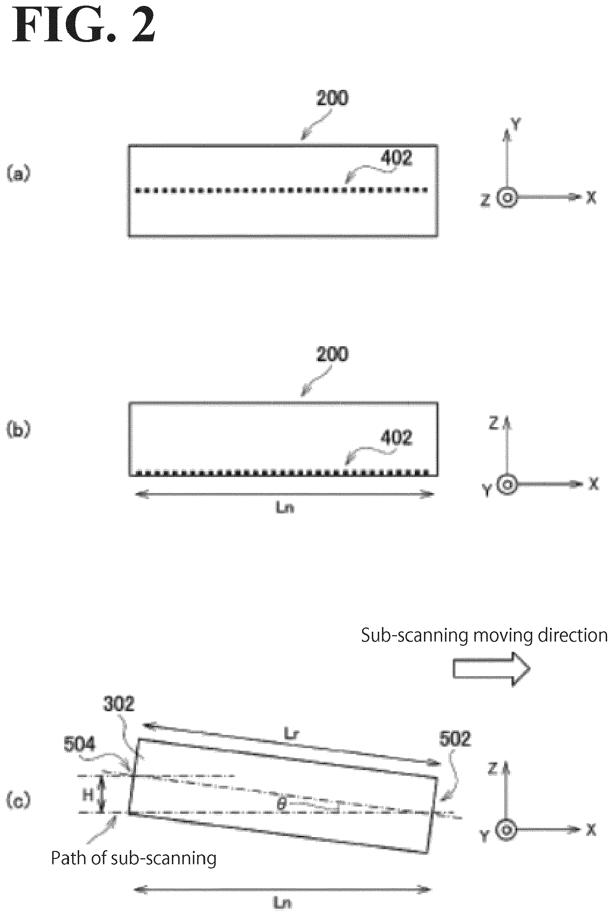

FIG. 2 is a diagram illustrating the configuration of the flattening roller 302 of the flattening roller unit 222 in more detail. FIGs. 2(a) and 2(b) are a bottom view and a side view of an exemplary configuration of the inkjet head 200 used in the present embodiment. FIG. 2(c) illustrates an exemplary configuration of the flattening roller 302 of the flattening roller unit 222.

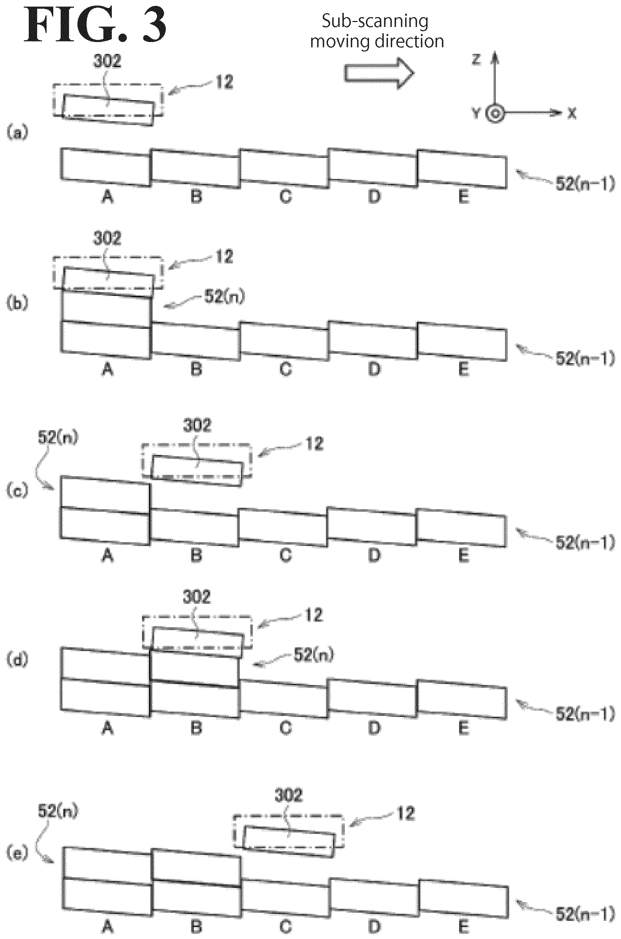

FIG. 3 is a diagram illustrating an exemplary operation for forming one layer of ink. FIGs. 3(a) to 3(e) illustrate an exemplary operation successively performed when one layer of ink is formed.

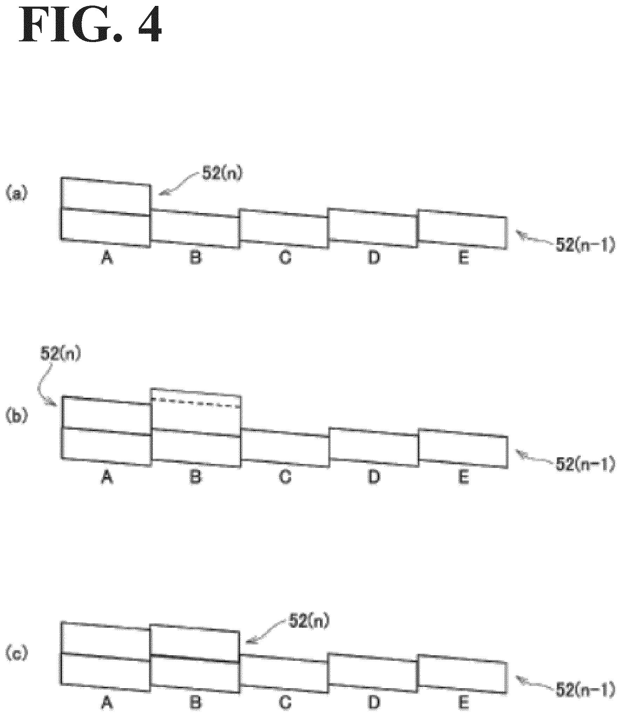

FIG. 4 is a diagram illustrating an example of tilting the flattening roller 302 in a preferable manner. FIG. 4(a) illustrates a state immediately before starting formation of a layer 52(*n*) in a region B. FIG. 4(b) illustrates a state in which an ink droplet has been ejected to the region B by the inkjet head of the ejection unit 12, and flattening by the flattening roller 302 has not been performed yet. FIG. 4(c) illustrates a state immediately after the layer of ink formed in the region B has been flattened.

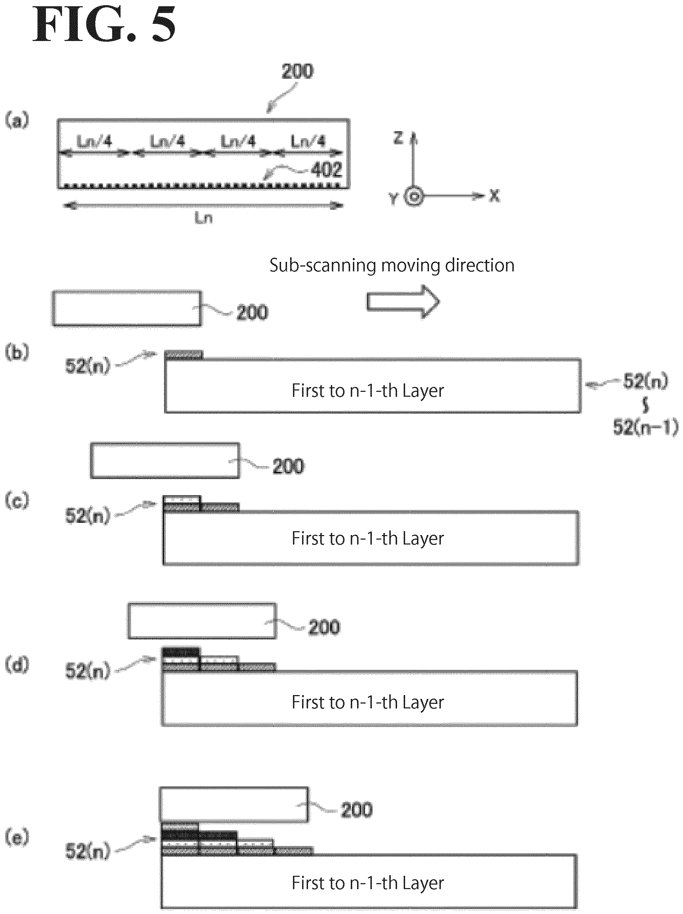

FIG. 5 is a diagram illustrating the operation for forming a layer of ink by a multi-pass method. FIG. 5(a) illustrates an exemplary configuration of the inkjet head 200. FIGs. 5(b) to 5(e) schematically illustrate how layers 52(*n*) are successively formed in each band region by the multi-pass method involving four passes.

### Modes for Carrying out the Invention

Hereinafter, an embodiment of the present invention will be described with reference to the drawings. FIG. 1 illustrates an example of a forming apparatus 10 according to an embodiment of the present invention. FIG. 1(a) illustrates an exemplary configuration of main elements of the forming apparatus 10.

In this embodiment, the forming apparatus 10 is an apparatus for forming a three-dimensional object 50 by additive manufacturing (three-dimensional object forming apparatus). As used herein, additive manufacturing refers to, for example, a method by which the three-dimensional object 50 is formed by adding a plurality of layers upon each other. As used herein, the three-dimensional object 50 refers to, for example, a three-dimensional structure.

The forming apparatus 10 may have a configuration that is the same as or similar to the configuration of a known forming apparatus except the configuration described below. The forming apparatus 10 may be, for example, an apparatus in which part of the configuration of the known inkjet printer is modified. For example, the forming apparatus 10 may be an apparatus obtained by modifying part of an inkjet printer for two-dimensional image printing that uses ultraviolet curable ink (UV ink). The forming apparatus 10 may further include, for example, various configurations necessary for forming and coloring the three-dimensional object 50 or for other purposes in addition to the illustrated configuration.

In this embodiment, the forming apparatus 10 includes an ejection unit 12, a main scanning driver 14, a platform 16, a sub-scanning driver 18, a deposition direction driver 20, and a controller 22. The ejection unit 12 is a section that ejects liquid droplets (ink droplets). The liquid droplets are the material of the three-dimensional object 50. The ejection unit 12 ejects ink droplets of ink that is curable under a predetermined condition, cures the ink, and builds up layers constituting the three-dimensional object 50.

In the present embodiment, the ink may be, for example, an ultraviolet curable ink that cures by exposure to ultraviolet light. As used herein, the ink refers to, for example, liquid that is ejected from the inkjet head. As used herein, the inkjet head refers to, for example, an ejection head that ejects liquid droplets by inkjet scheme.

In forming the three-dimensional object 50, the ejection unit 12 may form a support layer around the three-dimensional object 50. As used herein, the support layer refers to, for example, a deposited structure that supports the three-dimensional object 50 by surrounding the outer circumference of the three-dimensional object 50 being formed and is dissolved off using water or other removing means after completion of the three-dimensional object 50. More specific configuration of the ejection unit 12 will be described in more detail below.

The main scanning driver 14 is a driver that causes the ejection unit 12 to perform main scanning operation (Y scanning). As used herein, causing the ejection unit 12 to perform the main scanning operation refers to, for example, causing the inkjet head of the ejection unit 12 to perform the main scanning operation. Also as used herein, the main scanning operation refers to, for example, an operation for ejecting ink droplets while moving in a predetermined main scanning direction (Y direction in FIG. 1(a)).

In this embodiment, the main scanning driver 14 includes a carriage 102 and a guide rail 104. The carriage 102 is a holder for holding the ejection unit 12 to face the platform 16. As used herein, holding the ejection unit 12 to face the platform 16 refers to, for example, holding the ejection unit 12 such that the ejection direction of the ink droplet faces the direction toward the platform 16. During main scanning operation, the carriage 102 moves along the guide rail 104 while holding the ejection unit 12. The guide rail 104 is a rail member that guides the movement of the carriage 102 and moves the carriage 102 in response to a command from the controller 22 during the main scanning operation.

The movement of the ejection unit 12 in the main scanning operation may be a relative movement with respect to the platform 16, which supports the three-dimensional object 50. Thus, in the modification of the configuration of the forming apparatus 10, for example, the position of the ejection unit 12 may be fixed, and for example the three-dimensional object 50 may be moved by moving the platform 16.

The platform 16 is a base member that supports the three-dimensional object 50 being formed and is located at a position facing the inkjet head of the ejection unit 12. The three-dimensional object 50 being formed is located on the upper surface of the platform 16. In this embodiment, the platform 16 includes a configuration that allows at least the upper surface to move in a vertical direction (Z direction in FIG. 1(a)). The platform 16 is driven by the deposition direction driver 20 to move the upper surface in accordance with the progress of formation of the three-dimensional object 50. This configuration also changes the distance between the inkjet head of the ejection unit 12 and the platform 16, which is referred to as a head-to-platform distance, as required to adjust the distance (gap) between the build surface of the three-dimensional object 50 being formed and the ejection unit 12. As used herein, the head-to-platform distance may more specifically refer to, for example, the distance between a nozzle surface of the inkjet head on which nozzles are formed and the upper surface of the platform 16. As used herein, the build surface of the three-dimensional object 50 refers to, for example, a surface on which a next layer of ink is formed by the ejection unit 12.

The sub-scanning driver 18 is a driver that causes the ejection unit 12 to perform sub-scanning operation (X scanning). As used herein, causing the ejection unit 12 to perform the sub-scanning operation refers to, for example, causing the inkjet head of the ejection unit 12 to perform the sub-scanning operation. The sub-scanning operation refers to, for example, operation in which the ejection unit 12 is moved relative to the platform 16 in a sub-scanning direction (X direction in FIG. 1(a)), which is orthogonal to the main scanning direction. The sub-scanning operation may be an operation in which the ejection unit 12 is moved relative to the platform 16 in the sub-scanning direction by a predetermined forwarding distance. In this embodiment, the sub-scanning driver 18 causes the inkjet head of the ejection unit 12 to perform the sub-scanning operation in between the main scanning operations.

More specifically, the sub-scanning driver 18 causes the inkjet head to perform the sub-scanning operation by, for example, fixing the position of the ejection unit 12 in the sub-scanning direction and moving the platform 16. The sub-scanning driver 18 may cause the inkjet head to perform the sub-scanning operation by fixing the position of the platform 16 in the sub-scanning direction and moving the ejection unit 12.

The deposition direction driver 20 is a driver that moves at least one of the ejection unit 12 and the platform 16 in a deposition direction (Z direction in FIG. 1(a)), which is orthogonal to the main scanning direction and the sub-scanning direction. As used herein, the deposition direction refers to, for example, a direction in which a plurality of layers are deposited in the additive manufacturing. Also, moving the ejection unit 12 in the deposition direction refers to, for example, moving the inkjet head of the ejection unit 12 in the deposition direction. Moving the platform 16 in the deposition direction refers to, for example, moving at least the position of the upper surface of the platform 16. The deposition direction driver 20 changes the head-to-platform distance by moving at least one of the ejection unit 12 and the platform 16 in the deposition direction to cause the inkjet head to perform scanning in the Z direction (Z scanning).

More specifically, in the configuration illustrated in FIG. 1(a), the deposition direction driver 20 moves the platform 16 while, for example, fixing the position of the ejection unit 12 in the deposition direction. Alternatively, the deposition direction driver 20 may move the ejection unit 12 while fixing the position of the platform 16 in the deposition direction.

The controller 22 is, for example, a CPU of the forming apparatus 10 and controls the forming operation of the three-dimensional object 50 by controlling components of the forming apparatus 10. The controller 22 preferably controls components of the forming apparatus 10 based on, for example, the shape information and the color image information of the three-dimensional object 50 to be formed. According to the present embodiment, the three-dimensional object 50 is formed in a suitable manner.

Subsequently, more specific configuration of the ejection unit 12 will be described. FIG. 1(b) is an exemplary configuration of the ejection unit 12 in more detail. In this embodiment, the ejection unit 12 includes a plurality of coloring ink heads 202y, 202m, 202c, and 202k (hereinafter, referred to as the coloring ink heads 202y to 202k), a build material head 204, a white ink head 206, a clear ink head 208, a support material head 210, a plurality of ultraviolet (UV) light sources 220, and a flattening roller unit 222.

The coloring ink heads 202y to 202k, the build material head 204, the white ink head 206, the clear ink head 208, and the support material head 210 are inkjet heads that eject ink droplets by inkjet scheme. In this embodiment, the coloring ink heads 202y to 202k, the build material head 204, the white ink head 206, the clear ink head 208, and the support material head 210 are, for example, inkjet heads that eject ink droplets of ultraviolet curable ink. The inkjet heads are aligned in the main scanning direction (Y direction) and disposed at a position in the sub-scanning direction (X direction) suitable for ejecting purposes.

The coloring ink heads 202y to 202k, the build material head 204, the white ink head 206, the clear ink head 208, and the support material head 210 may favorably be, for example, known inkjet heads. Each of these inkjet heads includes an array of nozzles in which a plurality of nozzles are arranged in the sub-scanning direction on the surface facing the platform 16. Thus, the nozzles of each inkjet head eject ink droplets in a direction toward the platform 16. The nozzle direction in which the plurality of nozzles are arranged is a direction orthogonal to the main scanning direction. In the modification of the configuration of the inkjet head, the main scanning direction and the direction of the array of nozzles may intersect each other at an angle other than a right angle.

The arrangement of the coloring ink heads 202y to 202k, the build material head 204, the white ink head 206, the clear ink head 208, and the support material head 210 is not limited to the illustrated configuration, but may be changed in various forms. For example, some of the inkjet heads may be displaced with respect to other inkjet heads in the sub-scanning direction. The ejection unit 12 may further include, for example, inkjet heads for lighter variations of colors, or inkjet heads for R (red), G (green), B (blue), or orange.

The coloring ink heads 202y to 202k are inkjet heads that eject ink droplets of the colored ink having different colors from each other. In this embodiment, the coloring ink heads 202y to 202k eject ink droplets of the ultraviolet curable ink having colors of Y (yellow), M (magenta), C (cyan), and K (black).

The build material head 204 is an inkjet head that ejects ink droplets of the ink used for forming the inside of the three-dimensional object 50. For example, the build material head 204 ejects ink droplets of the ink used for forming the region of the three-dimensional object 50 that is not colored. In this embodiment, the build material head 204 ejects ink droplets of the forming-purpose ink (model material MO) having a predetermined color. The forming-purpose ink may be, for example, an ink dedicated to forming. In this embodiment, the forming-purpose ink is an ink having a different color from CMYK inks. The forming-purpose ink may be, for example, a white ink or a clear ink.

The white ink head 206 is an inkjet head that ejects ink droplet of a white (W) ink. The clear ink head 208 is an inkjet head that ejects ink droplets of a clear ink. As used herein, the clear ink refers to a clear color ink that is transparent (T).

The support material head 210 is an inkjet head that ejects ink droplets containing the material of the support layer. In this embodiment, the material of the support layer is preferably a water soluble material that dissolves in water after formation of the three-dimensional object 50. In this case, since the material of the support layer is removed after formation, the material is preferably less ultraviolet-curable and more dissolvable than the material constituting the three-dimensional object 50. The material of the support layer may favorably be, for example, a known material for the support layer.

The plurality of ultraviolet light sources 220 are examples of curing means for curing the ink and generate ultraviolet light that cures the ultraviolet curable ink. The ultraviolet light sources 220 may favorably be, for example, ultraviolet light-emitting diodes (UVLED). The ultraviolet light sources 220 may be metal halide lamps or mercury lamps.

In this embodiment, the plurality of ultraviolet light sources 220 are arranged on a first end and a second end of the ejection unit 12 in the main scanning direction such that the coloring ink heads 202y to 202k, the build material head 204, the white ink head 206, the clear ink head 208, and the support material head 210 are sandwiched between the ultraviolet light sources 220. More specifically, for example, one of the ultraviolet light sources 220 denoted as UV1 in the drawing is located on the first end of the ejection unit 12. One of the ultraviolet light sources 220 denoted as UV2 in the drawing is located on the second end of the ejection unit 12.

The flattening roller unit 222 is a configuration for flattening the layer of ultraviolet curable ink formed during formation of the three-dimensional object 50. In this embodiment, the flattening roller unit 222 is located between the ultraviolet light source 220 (UV2) on the second end and the array of inkjet heads, which include the coloring ink heads 202y to 202k, the build material head 204, the white ink head 206, the clear ink head 208, and the support material head 210. Thus, the flattening roller unit 222 is aligned with the array of inkjet heads in the main scanning direction and disposed at a position in the sub-scanning direction suitable for flattening purposes.

In this embodiment, the flattening roller unit 222 includes a flattening roller 302, a blade 304, and an ink collector 306. The flattening roller 302 is exemplary flattening means for flattening the layer of ink formed by the inkjet heads. For example, during the main scanning operation, the flattening roller 302 contacts the surface of the layer of ink to flatten the layer of ink. More specifically, in this embodiment, the flattening roller 302 flattens the layer of ink by removing some of the ink that has not been cured yet. The blade 304 is a blade member that removes, from the flattening roller 302, the ink that has been scraped off by the flattening roller 302. The ink collector 306 is a collector that collects the ink that has been removed from the flattening roller 302 by the blade 304. With the above configuration, the ejection unit 12 forms the layers of ink constituting the three-dimensional object 50 in response to the command from the controller 22.

As described above, the flattening roller unit 222 is located on one end of the array of inkjet heads in the main scanning direction. In relation to this configuration, in this embodiment, the main scanning driver 14 causes the ejection unit 12 to perform the main scanning operation at least when the ejection unit 12 is oriented with the flattening roller unit 222 behind the array of inkjet heads (when the ejection unit 12 is oriented toward one direction in the main scanning direction). In the main scanning operation with the ejection unit 12 in this orientation, the flattening roller unit 222 flattens the layers of ink.

The main scanning driver 14 may cause the ejection unit 12 to perform the main scanning operation bidirectionally. In this case, in addition to the main scanning operation in a first direction in which the ejection unit 12 is oriented with the flattening roller unit 222 behind the array of inkjet heads, the main scanning driver 14 causes the ejection unit 12 to perform the main scanning operation in a second direction in which the ejection unit 12 is oriented with the flattening roller unit 222 ahead of the array of inkjet heads (when the ejection unit 12 is oriented toward the other direction in the main scanning direction). In this case, during the main scanning operation in the second direction, the deposition direction driver 20 sets the head-to-platform distance to be greater than the head-to-platform distance during the main scanning operation in the first direction such that the flattening roller unit 222 does not contact the layers of ink. Thus, the flattening roller unit 222 flattens the layers of ink only during the main scanning operation in the first direction among the main scanning operations in the first and second directions. The flattening operation performed by the flattening roller 302 of the flattening roller unit 222 will be described in more detail below.

FIG. 2 is a diagram illustrating the configuration of the flattening roller 302 of the flattening roller unit 222 in more detail. As is described in relation to FIG. 1, in this embodiment, the flattening roller unit 222 is aligned with the array of inkjet heads in the main scanning direction (Y direction) and disposed at a position in the sub-scanning direction (X direction) suitable for flattening purposes. Thus, the flattening roller 302 of the flattening roller unit 222 moves together with the inkjet heads during the main scanning operation and the sub-scanning operation.

First, the configuration of inkjet heads 200 located on the ejection unit 12 together with the flattening roller 302 (refer to FIG. 1) will be described. FIGs. 2(a) and 2(b) are a bottom view and a side view of an exemplary configuration of one of the inkjet heads 200 used in the present embodiment.

In FIGs. 2(a) and 2(b), for the convenience of illustration, the inkjet head that corresponds to any of the plurality of inkjet heads (the coloring ink heads 202y to 202k, the build material head 204, the white ink head 206, the clear ink head 208, and the support material head 210) of the ejection unit 12 is illustrated as the inkjet head 200. Although not shown, the other inkjet heads of the ejection unit 12 move relative to the platform 16 (refer to FIG. 1) together with the inkjet head that is illustrated as the inkjet head 200 to perform, for example, the main scanning operation and the sub-scanning operation.

In this embodiment, the inkjet head 200 includes an array of nozzles 402. The array of nozzles 402 includes a plurality of nozzles arranged in the sub-scanning direction. The array of nozzles 402 are formed on the surface (nozzle surface) of the inkjet head 200 that faces the platform 16. FIG. 2 illustrates the configuration in which the length of the array of nozzles 402 in the sub-scanning direction is *Ln.* In this case, the inkjet head 200 includes the array of nozzles 402 in which the plurality of nozzles are arranged in a range having the width *Ln* in the sub-scanning direction.

As is described in relation to FIG. 1, the inkjet head 200 may have a configuration that is the same as or similar to the configuration of a known inkjet head. The inkjet head 200 may be, for example, a composite head (staggered head) in which a plurality of inkjet heads are arranged in a staggered arrangement. In this case, the length *Ln* of the array of nozzles 402 may be the length of the array of nozzles in the entire composite head.

FIG. 2(c) illustrates an exemplary configuration of the flattening roller 302 of the flattening roller unit 222. As described above, in this embodiment, the flattening roller 302 flattens the layer of ink formed by the inkjet head 200 by moving relative to the platform 16 together with the inkjet head 200 during the main scanning operation. As used herein, the layer of ink formed by the inkjet head 200 refers to, for example, the layer of ink formed by one inkjet head or the plurality of inkjet heads of the ejection unit 12. During the sub-scanning operation, the flattening roller 302 moves together with the inkjet head 200 relative to the platform 16 in a sub-scanning moving direction, which is a predetermined direction in the sub-scanning direction. In this case, the sub-scanning moving direction may be a direction in which the inkjet head 200 is forwarded relative to the platform 16.

In this embodiment, the flattening roller 302 is mounted in a state in which the flattening roller 302 is tilted with respect to a scanning path (a path of sub-scanning) in the sub-scanning direction (X direction) as illustrated in the drawing. The state in which the flattening roller 302 is tilted with respect to the scanning path in the sub-scanning direction refers to a state in which, for example, the axial direction of the flattening roller 302 is nonparallel to the scanning path in the sub-scanning direction. In this case, the axial direction of the flattening roller 302 is preferably orthogonal to the main scanning direction (Y direction).

More specifically, with respect to the sub-scanning moving direction during the sub-scanning operation, the flattening roller 302 is located such that a first end, which is an end portion 502 in this embodiment, is on the forward end, and a second end, which is an end portion 504 in this embodiment, is on the rearward end. In this case, the end portion 502 and the end portion 504 of the flattening roller 302 are the first end and the second end of the flattening roller 302 in the axial direction. The end portion 502 and the end portion 504 may be the first end and the second end of a region in the flattening roller 302 that actually performs flattening. As used herein, the region of the flattening roller 302 that actually performs flattening may refer to, for example, a region the width of which in the sub-scanning direction matches with the array of nozzles 402. For example, in the case illustrated in the drawing, the region having the width *Ln* in the sub-scanning direction corresponds to the region that actually performs flattening.

The scanning path in the sub-scanning direction refers to a path along which the flattening roller 302 moves during the sub-scanning operation. The path along which the flattening roller 302 moves refers to, for example, a path along which a predetermined position of the flattening roller 302 moves. More specifically, for example, the path along which the end portion 502 on the forward end of the flattening roller 302 moves during the sub-scanning operation may be considered as the scanning path in the sub-scanning direction.

The flattening roller 302 may be tilted such that, for example, the height in the deposition direction (Z direction) is higher at the end portion 504 on the rearward end than at the end portion 502 on the forward end. As used herein, the height in the deposition direction refers to the height with reference to the path (the scanning path in the sub-scanning direction) in the sub-scanning direction (X direction).

With this configuration, for example, when the flattening roller 302 is moved in the sub-scanning moving direction, the flattening roller 302 automatically separates from the surface of the layer of ink. In this case, for example, even if there is an error (deviation) in the accuracy of the flattening roller 302 to some extent, unnecessary contact between the upper surface of the layer of ink and the flattening roller 302 is avoided in a suitable manner. Thus, in the present embodiment, for example, during the sub-scanning operation, the flattening roller 302 is more easily moved in a suitable manner. Thus, for example, the layer of ink is flattened in a more suitable manner during formation of the three-dimensional object.

When the difference between the height of the end portion 504 of the flattening roller 302 and the height of the end portion 502 of the flattening roller 302 is represented by *H* as illustrated in the drawing, and the thickness of one layer of ink after being flattened is represented by *T,* the difference *H* in the height is preferably set to satisfy at least the relationship represented by *H < T.* With this configuration, for example, the flattening roller 302 is tilted in a suitable manner within the thickness range in which one layer of ink is formed. Thus, for example, the lower layer of ink located in the advancing direction of the flattening roller 302 and the flattening roller 302 are prevented from contacting each other during the sub-scanning operation.

The thickness *T* of the layer of ink that has been flattened may be, for example, a predetermined thickness (designed value) that is previously set as the thickness of one layer of ink. One layer of ink may be, for example, a layer of ink formed by the multi-pass method. As used herein, the multi-pass method refers to, for example, a method in which the main scanning operation is performed a number of times for each position in the operation for forming one layer of ink. In this case, the thickness of the layer of ink formed by performing the main scanning operation by a predetermined number of passes is the thickness *T* of one layer of ink.

The reason for mounting the flattening roller 302 in a tilted state in this embodiment is, for example, to perform flattening in a more suitable manner even if an error occurs in, for example, the accuracy of the flattening roller 302. More specifically, for example, when flattening by the flattening roller 302 is performed, there is generally no extra space between the upper surface of the layer of ink and the flattening roller 302 immediately after flattening. Thus, for example, if the flattening roller 302 is not tilted, the flattening roller 302 will move while lightly touching the upper surface of the layer of ink in the subsequently performed sub-scanning operation. As a result, the flattening roller 302 in motion and the upper surface of the layer of ink are likely to touch each other. In this case, if there is an error in, for example, the accuracy of the flattening roller 302, the flattening roller 302 and the upper surface of the layer of ink may contact each other unnecessarily. This may possibly hinder the operation.

In contrast, in the present embodiment, since the flattening roller 302 is tilted as described above, the flattening roller 302 automatically separates from the surface of the layer of ink when the flattening roller 302 is moved in the sub-scanning operation. This configuration prevents the above problem in a suitable manner. In order to prevent the above problem in a more suitable manner, the tilt amount of the flattening roller 302 is preferably set taking into consideration of an error in, for example, the accuracy of the flattening roller 302.

More specifically, for example, when the entire deviation amount of the flattening roller 302 is represented by *X,* the flattening roller 302 is preferably tilted to satisfy the relationship represented by *X < H < T - X,* where *H* represents the difference between the height of the end portion 504 and the height of the end portion 502, and *T* represents the thickness of one layer of ink. As used herein, the entire deviation amount of the flattening roller 302 refers to, for example, the deviation amount of the roller when the flattening roller 302 is rotated. The entire deviation amount of the flattening roller 302 may be considered as, for example, a variation amount caused by all factors resulting from, for example, the dimension accuracy, the temperature, and the vibration of the related parts including the flattening roller 302.

With this configuration, the entire deviation amount *X* of the flattening roller 302 is further taken into consideration to tilt the flattening roller 302 in a more suitable manner. Thus, for example, when the flattening roller 302 is moved in the sub-scanning moving direction, the roller automatically separates from the surface of the layer of ink in a more suitable manner, and the layer of ink is flattened in a more suitable manner.

The tilt amount of the flattening roller 302 is preferably set taking into consideration of the quality of the three-dimensional object to be formed. More specifically, when the flattening roller 302 is mounted in a tilted state as in the present embodiment, a step corresponding to the tilting of the flattening roller 302 is generated on the surface of the layer of ink after flattening. As a result, for example, a step having a height *H* at the maximum is generated on the surface of the three-dimensional object. Such a step influences the visual appearance and the sense of touch of the three-dimensional object.

For example, if such a step exceeds 20 µm, the influence on the appearance is increased. Thus, the difference *H* between the height of the end portion 504 of the flattening roller 302 and the height of the end portion 502 of the flattening roller 302 is preferably 20 µm or less. In this case, the difference *H* in the height is preferably greater than the entire deviation amount *X* of the roller. With this configuration, for example, while reducing the influence on the visual appearance of the three-dimensional object, the flattening roller 302 is tilted in a suitable manner. Thus, for example, the layer of ink is flattened in a more suitable manner.

If the step generated in accordance with the tilting of the flattening roller 302 exceeds, for example, 5 µm, the influence on the sense of touch of the three-dimensional object is increased. Thus, when the influence on the sense of touch is taken into consideration, for example, the difference *H* between the height of the end portion 504 and the height of the end portion 502 is preferably 5 µm. In this case as well, the difference *H* in the height is preferably greater than the entire deviation amount *X* of the roller. With this configuration, for example, while reducing the influence on the sense of touch of the three-dimensional object, the flattening roller 302 is tilted in a suitable manner. Thus, for example, the layer of ink is flattened in a more suitable manner.

In the case illustrated in the drawing, the flattening roller 302 is tilted such that the angle between the axial direction and the sub-scanning direction in a plane orthogonal to the main scanning direction is *θ*. In this case, as clearly illustrated in the drawing, the relationship between the distance *Lr* between the end portion 502 and the end portion 504 in the axial direction and the length *Ln* of the array of nozzles satisfies the relationship represented by *Ln* = *Lr* × cos*θ*. The relationship between the distance *Lr* and the difference *H* in the height satisfies the relationship represented by *H* = *Lr* × sin*θ*. Thus, to set the difference *H* in the height within the above-described range, these relationships are preferably taken into consideration for adjustment. In order to more reliably flatten the range corresponding to the length *Ln* of the array of nozzles, *Lr* × cos*θ* is preferably greater than *Ln.* Thus, the relationship between *Ln* and *Lr* preferably satisfies the relationship represented by *Ln < Lr* × cos*θ*.

Next, the flattening operation performed in the present embodiment is described in more detail. In this embodiment, the forming apparatus 10 (refer to FIG. 1) forms the layers of ink by a serial method in which the main scanning operation and the sub-scanning operation are repeated. In this case, more specifically, in the operation for forming one layer of ink, the forming apparatus 10 successively forms a band region, which is a band-like region having a width *Ln*/*n* obtained by dividing the length (width) *Ln* of the array of nozzles in the sub-scanning direction by a predetermined integer *n*, which is one or more. In this case, the integer *n* is the number of the main scanning operations (the number of passes) performed in the same region during formation of one layer of ink. In this case, in the operation for forming one layer of ink, the inkjet head 200 repeats the main scanning operation and the sub-scanning operation to successively form a layer of ink having a predetermined thickness in each band region along the sub-scanning moving direction.

The flattening roller 302 flattens the layer of ink during at least some of the main scanning operations. For example, when the ejection unit 12 configured as illustrated in FIG. 1 is used, for example, the layer of ink formed by the inkjet head 200 is flattened during the main scanning operation in which the ejection unit 12 is relatively moved with the flattening roller unit 222 behind the inkjet head 200 as described above.

FIG. 3 illustrates an exemplary operation for forming one layer of ink. FIGs. 3(a) to 3(e) illustrate an exemplary operation successively performed during formation of one layer of ink. To simplify the description, FIG. 3 illustrates the operation for forming one layer of ink by the single-pass method in which the number of passes *n* is set to one, and the main scanning operation is performed once for each region.

More specifically, FIG. 3 illustrates the operation for forming a layer 52(*n*) as one layer of ink. The layer 52(*n*) is an *n*-th layer of ink. The layer 52(*n*) is formed on a layer 52(*n*-1). The layer 52(*n*-1) is the layer of ink deposited at *n*-1-th time. In this case, the ejection unit 12 successively form part of the layer 52(*n*) in the band regions denoted as A to E in the drawing (hereinafter, referred to as the regions A to E) on the layer 52(*n*-1).

FIG. 3(a) illustrates a state immediately before the layer 52(*n*) is formed in the region A. As used herein, forming the layer 52(*n*) in the region A refers to forming part of the layer 52(*n*) on the layer 52(*n*-1) in the region A. Hereinafter, the similar operation for the regions A to E will be described similarly.

In this case, more specifically, the ejection unit 12 is placed at a position facing the region A by the sub-scanning driver 18 (refer to FIG. 1). Subsequently, the main scanning driver 14 (refer to FIG. 1) causes the inkjet heads of the ejection unit 12 to perform the main scanning operation to form the layer 52(*n*) in the region A. The flattening roller 302 of the ejection unit 12 flattens the layer of ink.

FIG. 3(b) illustrates a state immediately after the layer 52(*n*) is formed in the region A. Due to the flattening performed by the flattening roller 302, the layer 52(*n*) formed by the main scanning operation has a height that allows the layer 52(*n*) to just contact the flattening roller 302. As a result, the layer 52(*n*) in the region A is tilted in accordance with the tilting of the flattening roller 302 so that the front end in the sub-scanning moving direction is lowered. After the main scanning operation in the region A, the sub-scanning driver 18 causes the inkjet heads of the ejection unit 12 to perform the sub-scanning operation. In this sub-scanning operation, the sub-scanning driver 18 causes the ejection unit 12 to move in the sub-scanning moving direction relative to the platform 16 by a forwarding distance (forwarding pitch) equal to the length (width) *Ln* of the array of nozzles. Thus, the ejection unit 12 moves to a position facing the region B.

FIG. 3(c) illustrates a state immediately after performing the sub-scanning operation in which the ejection unit 12 is moved to a position facing the region B. This state is immediately before forming the layer 52(*n*) in the region B. At this position, the main scanning driver 14 causes the inkjet heads of the ejection unit 12 to perform the main scanning operation to form the layer 52(*n*) in the region B in the same or similar manner as described above except the position of the ejection unit 12. The flattening roller 302 of the ejection unit 12 flattens the layer of ink.

FIG. 3(d) illustrates a state immediately after forming the layer 52(*n*) in the region B. The ejection unit 12 forms, in the region B, the layer 52(*n*) that is tilted like the layer in region A by the above-described operation. Subsequently, the sub-scanning driver 18 causes the inkjet heads of the ejection unit 12 to perform the sub-scanning operation by a forwarding distance that is equal to the length (width) *Ln* of the array of nozzles. Thus, the ejection unit 12 moves to a position facing the region C.

In this case, since the flattening roller 302 is tilted such that the front end in the moving direction during the sub-scanning operation is lowered, the layer 52(*n*) in the region A is also tilted such that the front end in the moving direction during the sub-scanning operation is lowered. As a result, for example, during the main scanning operation, the rearward end of the flattening roller 302 is prevented from contacting the region A in a suitable manner. Thus, according to the present embodiment, for example, during the main scanning operation, flattening is performed more smoothly.

FIG. 3(e) illustrates a state immediately after performing the sub-scanning operation in which the ejection unit 12 is moved to a position facing the region C. This state is immediately before forming the layer 52(*n*) in the region C. Hereinafter, by repeating the same or similar operation as described above, the ejection unit 12 forms the layer 52(*n*) in each of the regions C, D, and E.

With the above configuration, each of the layers of ink constituting the three-dimensional object is formed in a suitable manner. The plurality of layers of ink are formed one above the other by performing scanning in the Z direction (Z scanning) by the deposition direction driver 20 (refer to FIG. 1). Thus, the three-dimensional object is formed in a suitable manner.

In the present embodiment, furthermore, since the flattening roller 302 is tilted such that the front end in the sub-scanning forwarding direction is lowered, the layer 52(*n*) in each region is tilted such that the front end in the sub-scanning moving direction is lowered as described above. In this case, for example, as clearly illustrated in FIGs. 3(a) to 3(e), when the flattening roller 302 is moved in the sub-scanning moving direction, the flattening roller 302 automatically separates from the surface of the layer 52(*n*). Thus, with this configuration, for example, even if there is an error in the accuracy of the flattening roller 302, the flattening roller 302 is prevented from unnecessarily contacting the layer of ink during the sub-scanning operation. Thus, the three-dimensional object is formed with a high accuracy in a more suitable manner.

Next, the method for tilting the flattening roller 302 will be described in more detail. FIG. 4 is a diagram illustrating an example of preferably tilting the flattening roller 302 and illustrates an example of the manner in which the layer 52(*n*) is formed in the region B.

In the operation described below, the region B is an example of a band being formed. As used herein, the band being formed refers to, for example, a band region that is completed by the next main scanning operation. The region A behind the region B in the sub-scanning moving direction is an example of the rearward band. As used herein, the rearward band refers to, for example, a completed band region that is adjacent to the band being formed and located rearward of the band being formed in the sub-scanning moving direction. The completed band region refers to a band region in which the layer of ink having a thickness corresponding to one layer has already been formed. The completed band region may be a band region in which the layer of ink having a thickness corresponding to one layer has been formed and cured.

The region C located forward of the region B in the sub-scanning moving direction is an example of a forward band. As used herein, the forward band refers to, for example, an incomplete band region that is adjacent to the band being formed and located forward of the band being formed in the sub-scanning moving direction. The incomplete or unformed band region refers to a band region in which a layer of ink having a thickness corresponding to one layer has not been formed yet. More specifically, for example, like the illustrated configuration, when one layer of ink is formed by the single-pass method, the incomplete band region refers to a region in which the main scanning operation for forming the one layer of ink has not been performed yet. In this case, the forward band, or the region C, is also referred to as a band region in which the layers of ink up to the layer 52(*n*-1), which is the layer of ink one layer below, have been formed.

FIG. 4(a) illustrates a state immediately before starting formation of the layer 52(n) in the region B. In this case, the layer 52(*n*) is already formed in the rearward band, that is, the region A, and the layer 52(*n*) is not formed in the band being formed, that is, the region B and in the forward band, that is, the region C.

FIG. 4(b) illustrates a state in which the ink droplets have been ejected to the region B by the inkjet heads of the ejection unit 12, and flattening by the flattening roller 302 has not been performed yet. This state is a state in the middle of the main scanning operation and corresponds to a state after the inkjet heads have passed and before the flattening roller 302 arrives each position in the region B (each position in the main scanning direction).

In this state, with regard to the relationship between the region A and the region B, the inkjet heads of the ejection unit 12 form the layer of ink such that the height of the ink at the rear end of the region B is higher than the front end of the region A. As used herein, the rear end of the region B refers to the rear end of the region B in the sub-scanning moving direction. Also as used herein, the front end of the region A is the front end of the region A in the sub-scanning moving direction. In the case illustrated in the drawing, the height of the front end of the region A refers to the height of the front end of the layer 52(*n*) formed in the region A.

With regard to the relationship between the region C and the region B, the inkjet heads of the ejection unit 12 form the layer of ink such that the height of the ink at the front end of the region B is higher than the layer of ink that is already formed at the rear end position of the region C. As used herein, the front end of the region B refers to the front end of the region B in the sub-scanning moving direction. The rear end of the region C refers to the rear end of the region C in the sub-scanning moving direction. In the case illustrated in the drawing, the layer of ink that is already formed at the rear end position of the region C refers to the layer 52(*n*-1) located at the rear end position of the region C. Thus, the state in which the height of the ink at the front end of the region B is higher than the layer of ink that is already formed at the rear end position of the region C refers to a state in which the height of the ink at the front end of the region B is higher than the layer 52(*n*-1) at the rear end position of the region C.

In FIG. 4(b), the broken line in the region B indicates the position where flattening is performed by the flattening roller 302. In the present embodiment, the position at which flattening is performed is preferably set in accordance with the layers of ink that are already formed in the forward and rearward band regions in the sub-scanning moving direction.

More specifically, with regard to the relationship between the region A and the region B, the flattening roller 302 flattens the layer of ink such that the height of the ink at the rear end of the region B is not lower than at least the front end of the region A. With regard to the relationship between the region C and the region B, the flattening roller 302 flattens the layer of ink such that the height of the ink at the front end of the region B is not lower than at least the layer of ink already formed at the position on the rear end of the region C.

FIG. 4(c) illustrates a state immediately after flattening the layer of ink formed in the region B. The flattened layer 52(*n*) as illustrated in the drawing is formed in the region B by performing flattening as described above.

With the above-described configuration, for example, the layer of ink is formed in the region B to be higher than the region A at the boundary between the region A and the region B, and subsequently, the layer of ink is flattened not to be lower than the region A. For example, the layer of ink is formed in the region B to be higher than the layer of ink already formed at the rear end position of the region C at the boundary between the region C and the region B, and subsequently, the layer of ink is flattened not to be lower than the layer of ink formed at the rear end position of the region C. In this case, the layers of ink are also formed in the band regions other than the region B in the same or similar manner as in the region B.

With this configuration, for example, the layer of ink is formed in each band region in a suitable manner to allow flattening. With regard to the subsequently performed flattening operation, since flattening is performed in a range in which the layer of ink is kept higher than the end portions of the layers of ink already formed in the forward and rearward band regions, flattening by the tilted flattening roller 302 is performed in a suitable manner while avoiding unnecessary contact between the layers of ink of the forward and rearward band regions and the flattening roller 302.

Thus, with this configuration, for example, when the flattening roller 302 is moved in the sub-scanning moving direction, the roller automatically separates from the surface of the layer of ink in a more suitable manner. This configuration, for example, flattens the layer of ink in a more suitable manner.

As described above, in the present embodiment, the length of the flattening roller 302 in the sub-scanning direction is equal to the length *Ln* of the array of nozzles. However, in the forming apparatus 10 (refer to FIG. 1), for example, an error may be caused in the forwarding distance during the sub-scanning operation. In this case, during the main scanning operation, the flattening roller 302 may project onto the forward or rearward band region.

In this respect, in the present embodiment, for example, even if the flattening roller 302 projects, the forward and rearward band regions and the flattening roller 302 do not contact each other as clearly illustrated in the drawing. Thus, according to the present embodiment, the layer of ink is flattened in a more suitable manner in this respect also.

Alternatively, in this case, for example, the length of the flattening roller 302 (the length in the sub-scanning direction) may be set, from the beginning, to a length that causes part of the flattening roller 302 to project onto at least one of the forward and rearward band regions in a range in which the sub-scanning operation and the main scanning operation are not hindered. This configuration allows for errors in, for example, the accuracy in mounting the flattening roller 302 and the operation accuracy.

Next, various modifications of the configuration and the operation of the forming apparatus 10 will be described. In the above description, for convenience of illustration and description, the operation of a case in which the layer of ink is formed by the single-pass method is described. However, to form the three-dimensional object with a higher accuracy, the layer of ink may be formed by, for example, the multi-pass method.

FIG. 5 is a diagram for describing the operation for forming the layer of ink by the multi-pass method and schematically illustrates an exemplary operation for forming the n-th layer of ink, which is the layer 52(*n*), in a state in which the layers of ink up to *n-*1-th layer have been deposited. The operation of the forming apparatus 10 illustrated in FIG. 5 is the same as or similar to the operation of the forming apparatus 10 illustrated in FIGs. 1 to 4 except the configuration described below. In FIG. 5, those components with the same reference numerals as the components in FIGs. 1 to 4 have the same or similar characteristic features as the components in FIGs. 1 to 4 except the configuration described below.

FIG. 5(a) illustrates an exemplary configuration of the inkjet head 200 used in the following operation. When the layer of ink is formed by the multi-pass method, for example, *n* is set to an integer equal to or greater than two, and one layer of ink is formed by performing the main scanning operation *n* times for each region. Hereinafter, a case in which one layer of ink is formed by the multi-pass method involving four passes will be described. That is, the number of passes *n* is four. In this case, the forwarding distance during the sub-scanning operation is *Ln*/4*,* which is obtained by dividing the length *Ln* of the array of nozzles by the number of passes. Thus, as illustrated in the drawing, with the configuration in which the array of nozzles 402 of the inkjet head 200 is divided into four in the sub-scanning direction, the ink droplets are successively ejected to the band regions the width of which in the sub-scanning direction is *Ln*/4*.*

FIGs. 5(b) to 5(e) schematically illustrate an example of a manner in which the layer 52(*n*) is successively formed in each band region by the multi-pass method involving four passes. To simplify the illustration, FIGs. 5(b) to 5(e) illustrate the layers of ink successively formed in each band region and omit the characteristic features generated by mounting the flattening roller 302 in a tilted state. In the actual configuration of the forming apparatus 10, the layer of ink is flattened using the flattening roller 302, which is provided in a tilted state, in the same or similar manner as the case described with reference to FIGs. 1 to 4. Thus, the layer 52(*n*) formed in each band region is formed in a tilted state corresponding to the tilting of the flattening roller 302.

More specifically, when one layer of ink 52(*n*) is formed by the multi-pass method involving four passes, as illustrated in FIG. 5(b), the main scanning operation of the first pass is performed in the first band region by the front 1/4 region of the inkjet head 200. Thus, the layer of ink that forms part of the layer 52(*n*) is formed on the lower layer 52(*n*-1).

Subsequently, the sub-scanning operation is performed by a forwarding distance corresponding to the number of passes. For example, in the case with the illustrated configuration, the inkjet head 200 is moved to a position illustrated in FIG. 5(c) by relatively moving the inkjet head 200 to the right side in the drawing by the forwarding distance of *Lnl*4*.* At this position, the main scanning operation of the second pass is performed so that the second main scanning operation is performed in the band region on the left end in the drawing. Additionally, the first main scanning operation is performed in the band region next to the above region on the right side.

Furthermore, the main scanning operations of the third pass and the fourth pass are subsequently repeated with the sub-scanning operation performed in between so that the third and fourth main scanning operations are performed in the band region on the left end in the drawing as illustrated in FIGs. 5(d) and 5(e). Thus, the main scanning operation is performed for the number of times corresponding to the number of passes in the band region on the left end in the drawing to complete formation of the layer 52(*n*). In other band regions also, the main scanning operation and the sub-scanning operation are repeated to successively complete formation of the layer 52(*n*).

In FIGs. 5(b) to 5(e), for convenience of description using schematic illustration, the ink is illustrated as being deposited per each pass. However, in the actual formation, in each of the first pass to fourth pass, the ink droplets are ejected around different positions on the XY plane. Thus, the ink is not actually deposited constantly as illustrated in the drawing.

With the above-described configuration, the layer of ink is formed in a suitable manner by the multi-pass method. The three-dimensional object is formed in a suitable manner by depositing the plurality of layers of ink. In this case as well, by mounting the flattening roller 302 in a tilted state, for example, the advantages that are the same as or similar to the advantages of FIGs. 1 to 4 are obtained.

The tilt amount of the flattening roller 302 can be determined based on the entire flattening roller 302 in the similar manner as in the case described using FIGs. 1 to 4. Thus, the tilt amount of the flattening roller 302 may be set to the same amount as the case described using FIGs. 1 to 4.

However, in the case with the four-pass method in which formation is performed by the multi-pass method involving four passes, the moving distance (forwarding distance) in the sub-scanning operation is 1/4 of the moving distance in the single-pass method. Thus, the effectual height *H* illustrated in FIG. 2(c) is reduced to 1/4. In this case, the relationship between the band being formed with respect to the rearward band and the forward band is preferably considered in accordance with the operation of the multi-pass method. More specifically, in this case, when the number of passes is *n*, the band being formed, the rearward band, and the forward band are regions having a width *Ln*/*n* in the sub-scanning direction (for example, *Ln*/4). With regard to the band being formed, at the point in time when the last main scanning operation is performed, the layer of ink is formed to be higher than the boundaries between the band being formed and the adjacent rearward band and between the band being formed and the adjacent forward band. The layer of ink is subsequently flattened by the flattening roller 302 not to be lower than the boundaries.

As used herein, the last main scanning operation for the band being formed refers to the last main scanning operation among the main scanning operations corresponding to the number of passes. The rearward band, which is the completed band region, is a region in which the main scanning operations corresponding to the number of passes have been completed. The incomplete band region, which is the forward band, is a region in which the main scanning operations corresponding to the number of passes have not been performed. That is, the forward band may be a band region in which the main scanning operations other than the last main scanning operation have been performed on the layer of ink that is one layer below, which is the layer 52(*n*-1), during the operation for forming the layer 52(*n*).

Next, supplemental explanation is given on the specific characteristic features obtained when the layer of ink is formed by the multi-pass method. The case in which the layers of ink are formed by the multi-pass method may be considered as, for example, a configuration in which the length of the flattening roller 302 in the sub-scanning direction is greater than the forwarding distance during the sub-scanning operation. The forwarding distance in one sub-scanning operation may be, for example, a distance obtained by dividing the effective length of the flattening roller 302 by the number of passes. As used herein, the effective length of the flattening roller 302 refers to, for example, the length of the region of the flattening roller 302 that performs flattening in the sub-scanning direction.

When the layer of ink is formed by the multi-pass method, the thickness *T* of one layer of ink after performing flattening may be considered as the thickness after all the main scanning operations corresponding to the number of passes have been performed. More specifically, for example, the thickness *T* of one layer of ink after performing flattening may be, for example, approximately 30 µm.

In this case, with regard to the ink dots formed by the main scanning operation of the first pass among the main scanning operations that are performed number of times, the ejected ink droplets collapse and spread so that the height is reduced. Thus, the probability that the ink dots will contact the flattening roller 302 is reduced. In particular, the ink dots formed by the main scanning operation of the fourth pass fill the gaps among the dots that have been ejected by the passes up to the third pass so that the height is increased. Thus, the probability that the ink dots will contact the flattening roller 302 is increased. Although such facts are taken into consideration, mounting the flattening roller 302 in a tilted state provides advantages.

The configuration and the operation of the forming apparatus 10 may further be modified. For example, in this embodiment, the forming apparatus 10 forms the three-dimensional object by depositing the layers of ink on the platform 16. However, as is described using FIGs. 3 and 4 for example, the layers of ink constituting the three-dimensional object have a shape including steps at the boundaries between the band regions since the flattening roller 302 is tilted. In this case, if the layer of ink is directly formed on the platform 16, which has a flat upper surface, the shape of the steps of the initial layer of ink may possibly be uneven. As a result, for example, an error may possibly occur in the accuracy of the three-dimensional object.

Thus, for example, at least one extra layer of ink may be formed on the platform 16, and the layers of ink constituting the three-dimensional object may be formed on the extra layer of ink. With this configuration, for example, the layers of ink constituting the three-dimensional object may be formed with a higher accuracy and in a more suitable manner. In this case, for example, even if there is unevenness on the upper surface of the platform 16, the influence of the unevenness is limited in a suitable manner.

In this case, the layer of ink formed between the layers of ink constituting the three-dimensional object and the platform 16 may be formed with the material for the support layer using the support material head 210 (refer to FIG. 1). With this configuration, for example, after completing the formation, the three-dimensional object is removed from the platform 16 more easily.

In the above description, with regard to the direction in which the inkjet head is relatively moved during the sub-scanning operation, the case in which the inkjet head is moved in one direction in the sub-scanning direction is mainly described. However, the direction in which the inkjet head is relatively moved during the sub-scanning operation may be both directions, that is, one direction and the other direction in the sub-scanning direction. In this case, for example, the direction of the sub-scanning operation may be changed per each layer of ink. With this configuration, for example, the three-dimensional object is formed more rapidly.

In this case, the flattening operation by the flattening roller 302 may be performed in only the main scanning operations performed before and after the sub-scanning operation in one direction. With this configuration, for example, the layer of ink is flattened in a suitable manner using the flattening roller 302 that is tilted to be suitable for the direction of the sub-scanning operation. In this case, during the main scanning operations performed before and after the sub-scanning operation in the other direction, the deposition direction driver 20 (refer to FIG. 1) may increase the head-to-platform distance to prevent at least the flattening roller 302 from contacting the layer of ink. With this configuration, for example, flattening is performed in a suitable manner only during the main scanning operations performed before and after the sub-scanning operation in one direction. In this case, the flattening roller 302 may be configured to be capable of moving in the Z direction, and the flattening roller 302 may be retracted during the main scanning operations in which flattening is not performed.

In a further modification, in addition to during the main scanning operations performed before and after the sub-scanning operation in one direction, flattening may be performed during the main scanning operations performed before and after the sub-scanning operation in the other direction. In this case, the flattening roller 302 that is tilted in the opposite direction to be suitable for the direction of movement of the sub-scanning operation may be used. In this case, for example, during each main scanning operation, only the flattening roller 302 that performs flattening contacts the layer of ink, and the other flattening roller 302 is preferably retracted.

The embodiment of the present invention is described above. However, the technical range of the present disclosure is not limited to the range described in the above embodiment. It is obvious for those skilled in the art that numerous modifications and improvements of the above disclosure are possible.

### Industrial Applicability

The present invention is used for, for example, the three-dimensional object forming apparatus in a suitable manner.

### Description of the Reference Numeral

10...Three-dimensional object forming apparatus, 12...Ejection unit, 14...Main scanning driver, 16...Platform, 18...Sub-scanning driver, 20...Deposition direction driver, 22...Controller, 50...Three-dimensional object, 52...Layer, 102...Carriage, 104...Guide rail, 200...Inkjet head, 204...Coloring ink head, 204...Build material head, 206...White ink head, 208...Clear ink head, 210...Support material head, 220...Ultraviolet light source, 222...Flattening roller unit, 302...Flattening roller, 304...Blade, 306...Ink collector, 402...Array of nozzles, 502... End portion, 504... End portion

## Claims

1. A forming apparatus (10) for forming a three-dimensional object (50) by additive manufacturing, the apparatus comprising:
an inkjet head (200) configured to eject an ink droplet by inkjet scheme;
a platform (16) comprising a base member configured to support the three-dimensional object (50) being formed, the platform (16) being disposed at a position facing the inkjet head (200);
a main scanning driver (14) configured to cause the inkjet head (200) to perform a main scanning operation in which the inkjet head (200) moves relative to the platform (16) in a predetermined main scanning direction while ejecting an ink droplet;
a sub-scanning driver (18) configured to cause the inkjet head (200) to move relative to the platform (16) in a sub-scanning direction orthogonal to the main scanning direction;
a deposition direction driver (20) configured to change the distance between the inkjet head (200) and the platform (16) by moving at least one of the platform (16) and the inkjet head (200); and
a roller (302) configured to flatten a layer of ink formed by the inkjet head (200) by moving relative to the platform (16) together with the inkjet head (200) during the main scanning operation,
wherein, in between the main scanning operations, the sub-scanning driver (18) is configured to cause the inkjet head (200) to perform a sub-scanning operation in which the inkjet head (200) moves relative to the platform (16) by a predetermined forwarding distance in a sub-scanning moving direction, which is a predetermined direction in the sub-scanning direction,
wherein, during the sub-scanning operation, the roller (302) is configured to move relative to the platform (16) in the sub-scanning moving direction together with the inkjet head (200), and
wherein the roller (302) comprises a first end on a forward end in the sub-scanning moving direction and a second end on a rearward end in the sub-scanning moving direction, and the roller (302) is disposed in a tilted manner such that the height in the deposition direction of the second end on the rearward end is higher than the height in the deposition direction of the first end on the forward end.

2. The forming apparatus (10) according to claim 1, wherein the inkjet head (200) comprises an array of nozzles (402) comprising a plurality of nozzles disposed in a range comprising a width *Ln* in the sub-scanning direction,
wherein, in the operation for forming one layer of ink, the forming apparatus (10) is configured to successively form a band region that is a band-like region comprising a width *Ln*/*n* obtained by dividing the width *Ln* in the sub-scanning direction by a predetermined integer *n* of one or more,
wherein, in the operation for forming one layer of ink, the inkjet head (200) is configured to repeat the main scanning operation and the sub-scanning operation to successively form a layer of ink in each band region at a predetermined thickness along the sub-scanning moving direction,
during the last main scanning operation for forming each band region in the operation for forming one layer of ink,
with regard to a band being formed, which is the band region in which formation will be completed by the last main scanning operation, and a rearward band, which is the band region in which formation has been completed and is located rearward of the band being formed in the sub-scanning moving direction,
the inkjet head (200) is configured to form a layer of ink such that, in a state before being flattened by the roller (302), the height of the ink on the rear end of the band being formed in the sub-scanning moving direction is higher than the front end of the rearward band, and the roller (302) is configured to flatten the layer of ink such that the height of the ink on the rear end of the band being formed in the sub-scanning moving direction does not become lower than at least the front end of the rearward band.

3. The forming apparatus (10) according to claim 2, wherein, when an incomplete band region located forward of the band being formed in the sub-scanning moving direction is referred to as a forward band,
the inkjet head (200) is configured to form a layer of ink such that, in a state before being flattened by the roller (302), the height of the ink on the front end of the band being formed in the sub-scanning moving direction is higher than the layer of ink already formed at a position on the rear end of the forward band, and the roller (302) is configured to flatten the layer of ink such that the height of the ink on the front end of the band being formed in the sub-scanning moving direction does not become lower than at least the layer of ink already formed at a position on the rear end of the forward band.

4. The forming apparatus (10) according to any one of claims 1 to 3, wherein the inkjet head (200) is configured to eject an ink droplet of ink curable under a predetermined condition,
wherein the forming apparatus (10) further comprises curing means (220) configured to cure the ink, and
wherein the roller (302) is configured to remove part of the ink before being cured to flatten the layer of ink formed by the inkjet head (200).

5. The forming apparatus (10) according to any one of claims 1 to 4, wherein, when the thickness of one layer of ink after being flattened is represented by *T*, and the difference in the height between the second end of the roller (302) and the first end of the roller (302) is represented by *H,* the relationship represented by *H < T* is satisfied.

6. The forming apparatus (10) according to any one of claims 1 to 5, wherein, when an entire deviation amount of the roller (302) is represented by *X,* the relationship represented by *X < H < T* - *X* is satisfied.

7. A method for forming a three-dimensional object (50) by additive manufacturing using:
an inkjet head (200) configured to eject an ink droplet by inkjet scheme;
a platform (16) comprising a base member configured to support the three-dimensional object (50) being formed, the platform (16) being disposed at a position facing the inkjet head (200); and
a roller (302) configured to flatten a layer of ink formed by the inkjet head (200),
the method comprising:
causing the inkjet head (200) to perform a main scanning operation in which the inkjet (200) head moves relative to the platform (16) in a predetermined main scanning direction while ejecting an ink droplet;
moving the inkjet head (200) relative to the platform (16) in a sub-scanning direction orthogonal to the main scanning direction;
changing the distance between the inkjet head (200) and the platform (16) by moving at least one of the platform (16) and the inkjet head (200);
flattening a layer of ink formed by the inkjet head (200) by moving the roller (302) relative to the platform (16) together with the inkjet head (200) during the main scanning operation;
causing the inkjet head (200) to perform, in between the main scanning operations, a sub-scanning operation in which the inkjet head (200) moves relative to the platform (16) by a predetermined forwarding distance in a sub-scanning moving direction, which is a predetermined direction in the sub-scanning direction; and
causing the roller (302) to move relative to the platform (16) in the sub-scanning moving direction together with the inkjet head (200) during the sub-scanning operation,
wherein the roller (302) comprises a first end on a forward end in the sub-scanning moving direction and a second end on a rearward end in the sub-scanning moving direction, and the roller (302) is disposed in a tilted manner such that the height in the deposition direction of the second end on the rearward end is higher than the height in the deposition direction of the first end on the forward end.

## Patentansprüche

1. Formgebungsvorrichtung (10) zum Bilden eines dreidimensionalen Objekts (50) durch additives Herstellen, wobei die Vorrichtung aufweist:
einen Tintenstrahlkopf (200), der eingerichtet ist, Tintentröpfchen durch ein Tintenstrahlsystem auszustoßen;
eine Plattform (16), die ein Basiselement aufweist, das eingerichtet ist, das dreidimensionale Objekt (50), das gebildet wird, zu tragen, wobei die Plattform (16) an einer Position angeordnet ist, die dem Tintenstrahlkopf (200) gegenüberliegt;
einen Haupt-Scantreiber (14), der eingerichtet ist, den Tintenstrahlkopf (200) zu veranlassen, einen Haupt-Scanvorgang durchzuführen, in welchem der Tintenstrahlkopf (200) sich relativ zu der Plattform (16) in einer vorgegebenen Haupt-Scanrichtung bewegt, während Tintentröpfchen ausgestoßen werden;
einen Unter-Scantreiber (18), der eingerichtet ist, den Tintenstrahlkopf (200) zu veranlassen, sich relativ zu der Plattform (16) in einer Unter-Scanrichtung senkrecht zu der Haupt-Scanrichtung zu bewegen;
einen Abscheidungsrichtungstreiber (20), der eingerichtet ist, einen Abstand zwischen dem Tintenstrahlkopf (200) und der Plattform (16) durch Bewegen von zumindest einem von der Plattform (16) und dem Tintenstrahlkopf (200) zu ändern; und
eine Rolle (302), die eingerichtet ist, eine Tintenschicht, die durch den Tintenstrahlkopf (200) gebildet wird, durch ein Bewegen relativ zu der Plattform (16) zusammen mit dem Tintenstrahlkopf (200) während eines Haupt-Scanvorgangs zu glätten,
wobei der Unter-Scantreiber (18) eingerichtet ist, zwischen den Haupt-Scanvorgängen den Tintenstrahlkopf (200) zu veranlassen, einen Unter-Scanvorgang durchzuführen, bei dem sich der Tintenstrahlkopf (200) relativ zu der Plattform (16) um einen vorgegebenen Vorwärtsabstand in einer Unter-Scanbewegungsrichtung bewegt, welche eine vorgegebene Richtung in der Unter-Scanrichtung ist,
wobei die Rolle (302) eingerichtet ist, sich während des Unter-Scanvorgangs relativ zu der Plattform (16) in der Unter-Scanbewegungsrichtung zusammen mit dem Tintenstrahlkopf (200) zu bewegen, und
wobei die Rolle (302) ein erstes Ende an einem vorderen Ende in der Unter-Scanbewegungsrichtung und ein zweites Ende an einem hinteren Ende in der Unter-Scanbewegungsrichtung aufweist und die Rolle (302) in einer geneigten Weise angeordnet ist, so dass in der Abscheidungsrichtung die Höhe des zweiten Endes an dem hinteren Ende höher als die Höhe in der Abscheidungsrichtung des ersten Endes an dem vorderen Ende ist.

2. Formgebungsvorrichtung (10) gemäß Anspruch 1, wobei der Tintenstrahlkopf (200) eine Anordnung von Düsen (402) aufweist, die mehrere Düsen aufweist, die in einem in der Unter-Scanrichtung eine Breite *Ln* aufweisenden Bereich angeordnet sind,
wobei die Formgebungsvorrichtung (10) bei dem Vorgang zum Bilden einer Tintenschicht eingerichtet ist, nacheinander ein Bandgebiet zu bilden, das ein bandähnliches Gebiet ist, das eine Breite *Ln*/*n* aufweist, die durch Teilen der Breite *Ln* in der Unter-Scanrichtung durch eine vorgegebene ganze Zahl *n,* die 1 oder mehr ist, erhalten wird,
wobei bei dem Vorgang zum Bilden einer Tintenschicht der Tintenstrahlkopf (200) eingerichtet ist, den Haupt-Scanvorgang und den Unter-Scanvorgang zu wiederholen, um nacheinander eine Tintenschicht in jedem Bandgebiet mit einer vorgegebenen Dicke entlang der Unter-Scanbewegungsrichtung zu bilden,
wobei, während des letzten Haupt-Scanvorgangs zum Bilden von jedem Bandgebiet in dem Vorgang zum Bilden einer Tintenschicht, ein zu bildendes Band das Bandgebiet ist, in welchem eine Bildung durch den letzten Haupt-Scanvorgang abgeschlossen wird, und ein hinteres Band das Bandgebiet ist, in welchem die Bildung abgeschlossen wurde und das sich hinter dem Band befindet, das in der Unter-Scanbewegungsrichtung gebildet wird, der Tintenstrahlkopf (200) eingerichtet ist, eine Tintenschicht derart zu bilden, dass in einem Zustand, bevor sie durch die Rolle (302) geglättet wird, die Höhe der Tinte an dem hinteren Ende des Bands, das in der Unter-Scanbewegungsrichtung gebildet wird, höher als das vordere Ende des hinteren Bands ist, und die Rolle (302) eingerichtet ist, die Tintenschicht derart zu glätten, dass die Höhe der Tinte an dem hinteren Ende des Bands, das in der Unter-Scanbewegungsrichtung gebildet wird, zumindest nicht niedriger ist als das vordere Ende des hinteren Bandes.

3. Formgebungsvorrichtung (10) gemäß Anspruch 2, wobei, wenn ein unvollständiges Bandgebiet, das sich vor dem Band befindet, das in der Unter-Scanbewegungsrichtung gebildet wird, als vorderes Band bezeichnet wird,
der Tintenstrahlkopf (200) eingerichtet ist, eine Tintenschicht derart zu bilden, dass in einem Zustand, bevor sie durch die Rolle (302) geglättet wird, die Höhe der Tinte an dem vorderen Ende des Bands, das in der Unter-Scanbewegungsrichtung gebildet wird, höher als die Tintenschicht ist, die bereits an einer Position an dem hinteren Ende des vorderen Bands gebildet ist, und die Rolle (302) eingerichtet ist, die Tintenschicht derart zu glätten, dass die Höhe der Tinte an dem vorderen Ende des Bands, das in der Unter-Scanbewegungsrichtung gebildet wird, zumindest nicht niedriger ist als die Tintenschicht, die bereits an einer Position an dem hinteren Ende des vorderen Bands gebildet ist.

4. Formgebungsvorrichtung (10) gemäß einem der Ansprüche 1 bis 3, wobei der Tintenstrahlkopf (200) eingerichtet ist, ein Tintentröpfchen einer Tinte auszustoßen, die unter vorgegebenen Bedingungen aushärtbar ist,
wobei die Formgebungsvorrichtung (10) ferner ein Aushärtemittel (220) aufweist, das eingerichtet ist, die Tinte auszuhärten, und
wobei die Rolle (302) eingerichtet ist, einen Teil der Tinte zu entfernen, bevor sie ausgehärtet wird, um die Tintenschicht, die durch den Tintenstrahlkopf (200) gebildet ist, zu glätten.

5. Formgebungsvorrichtung (10) gemäß einem der Ansprüche 1 bis 4, wobei, wenn die Dicke einer Tintenschicht, nachdem sie geglättet ist, durch *T* repräsentiert wird und die Differenz der Höhe zwischen dem zweiten Ende der Rolle (302) und dem ersten Ende der Rolle (302) durch *H* repräsentiert wird, die durch *H < T* repräsentierte Beziehung erfüllt ist.

6. Formgebungsvorrichtung (10) gemäß einem der Ansprüche 1 bis 5, wobei, wenn ein gesamte Abweichungsbetrag der Rolle (302) durch *X* repräsentiert wird, die durch *X < H < T* - *X* repräsentierte Beziehung erfüllt ist.

7. Verfahren zum Bilden eines dreidimensionalen Objekts (50) durch additives Herstellen unter Verwendung:
eines Tintenstrahlkopfs (200), der eingerichtet ist, Tintentröpfchen durch ein Tintenstrahlsystem auszustoßen;
einer Plattform (16), die ein Basiselement aufweist, das eingerichtet ist, das dreidimensionale Objekt (50), das gebildet wird, zu tragen, wobei die Plattform (16) an einer Position angeordnet ist, die dem Tintenstrahlkopf (200) gegenüberliegt; und
einer Rolle (302), die eingerichtet ist, eine Tintenschicht, die durch den Tintenstrahlkopf (200) gebildet ist, zu glätten,
wobei das Verfahren aufweist:
Veranlassen des Tintenstrahlkopfs (200) einen Haupt-Scanvorgang durchzuführen, in welchem sich der Tintenstrahlkopf (200) relativ zu der Plattform (16) in einer vorgegebenen Haupt-Scanrichtung bewegt, während Tintentröpfchen ausgestoßen werden;
Bewegen des Tintenstrahlkopfs (200) relativ zu der Plattform (16) in einer Unter-Scanrichtung senkrecht zu der Haupt-Scanrichtung;
Ändern eines Abstands zwischen dem Tintenstrahlkopf (200) und der Plattform (16) durch Bewegen von zumindest einem von der Plattform (16) und dem Tintenstrahlkopf (200); und
Glätten einer Tintenschicht, die durch den Tintenstrahlkopf (200) gebildet ist, durch ein Bewegen der Rolle (302) relativ zu der Plattform (16) zusammen mit dem Tintenstrahlkopf (200) während eines Haupt-Scanvorgangs,
Veranlassen des Tintenstrahlkopfs (200) zwischen den Haupt-Scanvorgängen einen Unter-Scanvorgang durchzuführen, bei dem sich der Tintenstrahlkopf (200) relativ zu der Plattform (16) um einen vorgegebenen Vorwärtsabstand in einer Unter-Scanbewegungsrichtung bewegt, welche eine vorgegebene Richtung in der Unter-Scanrichtung ist, und
Veranlassen der Rolle (302), sich relativ zu der Plattform (16) in der Unter-Scanbewegungsrichtung zusammen mit dem Tintenstrahlkopf (200) während des Unter-Scanvorgangs zu bewegen, und
wobei die Rolle (302) ein erstes Ende an einem vorderen Ende in der Unter-Scanbewegungsrichtung und ein zweites Ende an einem hinteren Ende in der Unter-Scanbewegungsrichtung aufweist und die Rolle (302) in einer geneigten Weise angeordnet ist, so dass in der Abscheidungsrichtung die Höhe des zweiten Endes an dem hinteren Ende höher als die Höhe in der Abscheidungsrichtung des ersten Endes an dem vorderen Ende ist.

## Revendications

1. Appareil de formation (10) destiné à former un objet tridimensionnel (50) par une fabrication additive, l'appareil comprenant :
une tête à jet d'encre (200) configurée pour éjecter une gouttelette d'encre par un système à jet d'encre ;
une plate-forme (16) comprenant un élément de base configuré pour supporter l'objet tridimensionnel (50) en cours de formation, la plate-forme (16) étant disposée à une position faisant face à la tête à jet d'encre (200) ;
un pilote de balayage principal (14) configuré pour amener la tête à jet d'encre (200) à exécuter une opération de balayage principal durant laquelle la tête à jet d'encre (200) se déplace par rapport à la plate-forme (16) dans une direction de balayage prédéterminée tout en éjectant une gouttelette d'encre ;
un pilote de balayage secondaire (18) configuré pour amener la tête à jet d'encre (200) à se déplacer par rapport à la plate-forme (16) dans une direction de balayage secondaire orthogonale à la direction de balayage principal ;
un pilote de direction de dépôt (20) configuré pour modifier la distance séparant la tête à jet d'encre (200) et la plate-forme (16) par un déplacement d'au moins l'une de la plate-forme (16) et de la tête à jet d'encre (200) ; et
un rouleau (302) configuré pour aplatir une couche d'encre formée par la tête à jet d'encre (200) par un déplacement par rapport à la plate-forme (16) conjointement avec la tête à jet d'encre (200) pendant l'opération de balayage principal,
dans lequel, entre les opérations de balayage principal, le pilote de balayage secondaire (18) est configuré pour amener la tête à jet d'encre (200) à exécuter une opération de balayage secondaire durant laquelle la tête à jet d'encre (200) se déplace par rapport à la plate-forme (16) d'une distance d'avance prédéterminée dans un sens de déplacement de balayage secondaire, qui est un sens prédéterminé dans la direction de balayage secondaire,
dans lequel, pendant l'opération de balayage secondaire, le rouleau (302) est configuré pour se déplacer par rapport à la plate-forme (16) dans le sens de déplacement de balayage secondaire conjointement avec la tête à jet d'encre (200), et
dans lequel le rouleau (302) comprend une première extrémité située sur une extrémité avant dans le sens de déplacement de balayage secondaire et une seconde extrémité située sur une extrémité arrière dans le sens de déplacement de balayage secondaire, et le rouleau (302) est disposé de manière inclinée de sorte que la hauteur dans la direction de dépôt de la seconde extrémité de l'extrémité arrière soit supérieure à la hauteur dans la direction de dépôt de la première extrémité de l'extrémité avant.

2. Appareil de formation (10) selon la revendication 1, dans lequel la tête à jet d'encre (200) comprend un réseau de buses (402) comprenant une pluralité de buses disposées sur une étendue ayant une largeur *Ln* dans la direction de balayage secondaire,
dans lequel, lors de l'opération consistant à former une couche d'encre, l'appareil de formation (10) est configuré pour former successivement une région de bande qui est une région de type bande ayant une largeur *Ln*/*n* obtenue par une division, par un nombre entier prédéterminé *n* supérieur ou égal à un, de la largeur *Ln* dans la direction de balayage secondaire,
dans lequel, lors de l'opération consistant à former une couche d'encre, la tête à jet d'encre (200) est configurée pour répéter l'opération de balayage principal et l'opération de balayage secondaire pour former successivement une couche d'encre dans chaque région de bande sur une épaisseur prédéterminée dans le sens de déplacement de balayage secondaire,
pendant la dernière opération de balayage principal permettant de former chaque région de bande lors de l'opération consistant à former une couche d'encre,
par rapport à une bande en cours de formation, qui est la région de bande dans laquelle une formation sera terminée par la dernière opération de balayage principal, et à une bande arrière, qui est la région de bande dans laquelle une formation a été terminée et qui est située en arrière de la bande en cours de formation dans le sens de déplacement de balayage secondaire,
la tête à jet d'encre (200) est configurée pour former une couche d'encre de sorte que, dans un état avant d'être aplatie par le rouleau (302), la hauteur de l'encre de l'extrémité arrière de la bande en cours de formation dans le sens de déplacement de balayage secondaire soit supérieure à celle de l'extrémité avant de la bande arrière, et le rouleau (302) est configuré pour aplatir la couche d'encre de sorte que la hauteur de l'encre de l'extrémité arrière de la bande en cours de formation dans le sens de déplacement de balayage secondaire ne soit pas inférieure à celle d'au moins l'extrémité avant de la bande arrière.

3. Appareil de formation (10) selon la revendication 2, dans lequel, lorsqu'une région de bande incomplète située en avant de la bande en cours de formation dans le sens de déplacement de balayage secondaire est désignée comme bande avant,
la tête à jet d'encre (200) est configurée pour former une couche d'encre de sorte que, dans un état avant d'être aplatie par le rouleau (302), la hauteur de l'encre de l'extrémité avant de la bande en cours de formation dans le sens de déplacement de balayage secondaire soit supérieure à celle de la couche d'encre déjà formée à une position de l'extrémité arrière de la bande avant, et le rouleau (302) est configuré pour aplatir la couche d'encre de sorte que la hauteur de l'encre de l'extrémité avant de la bande en cours de formation dans le sens de déplacement de balayage secondaire ne soit pas inférieure à celle d'au moins la couche d'encre déjà formée à une position de l'extrémité arrière de la bande avant.

4. Appareil de formation (10) selon l'une quelconque des revendications 1 à 3, dans lequel la tête à jet d'encre (200) est configurée pour éjecter une gouttelette d'encre d'encre pouvant durcir sous une condition prédéterminée,
dans lequel l'appareil de formation (10) comprend en outre un moyen de durcissement (220) configuré pour durcir l'encre, et
dans lequel le rouleau (302) est configuré pour éliminer une partie de l'encre avant qu'elle n'ait durcie pour aplatir la couche d'encre formée par la tête à jet d'encre (200).

5. Appareil de formation (10) selon l'une quelconque des revendications 1 à 4, dans lequel, lorsque l'épaisseur d'une couche d'encre, après avoir été aplatie, est représentée par *T,* et que la différence de la hauteur entre la seconde extrémité du rouleau (302) et la première extrémité du rouleau (302) est représentée par *H,* la relation représentée par *H* < *T* est satisfaite.

6. Appareil de formation (10) selon l'une quelconque des revendications 1 à 5, dans lequel, lorsqu'une quantité de déviation totale du rouleau (302) est représentée par *X,* la relation représentée par *X < H < T- X* est satisfaite.

7. Procédé de formation d'un objet tridimensionnel (50) par une fabrication additive faisant appel à :
une tête à jet d'encre (200) configurée pour éjecter une gouttelette d'encre par un système à jet d'encre ;
une plate-forme (16) comprenant un élément de base configuré pour supporter l'objet tridimensionnel (50) en cours de formation, la plate-forme (16) étant disposée à une position faisant face à la tête à jet d'encre (200) ; et
un rouleau (302) configuré pour aplatir une couche d'encre formée par la tête à jet d'encre (200),
le procédé consistant à :
amener la tête à jet d'encre (200) à exécuter une opération de balayage principal durant laquelle la tête à jet d'encre (200) se déplace par rapport à la plate-forme (16) dans une direction de balayage principal prédéterminée tout en éjectant une gouttelette d'encre ;
déplacer la tête à jet d'encre (200) par rapport à la plate-forme (16) dans une direction de balayage secondaire orthogonale à la direction de balayage principal ;
modifier la distance entre la tête à jet d'encre (200) et la plate-forme (16) par un déplacement d'au moins l'une de la plate-forme (16) et de la tête à jet d'encre (200) ;
aplatir une couche d'encre formée par la tête à jet d'encre (200) par un déplacement du rouleau (302) par rapport à la plate-forme (16) conjointement avec la tête à jet d'encre (200) pendant l'opération de balayage principal ;
amener la tête à jet d'encre (200) à exécuter, entre les opérations de balayage principal, une opération de balayage secondaire durant laquelle la tête à jet d'encre (200) se déplace par rapport à la plate-forme (16) d'une distance vers l'avant prédéterminée dans un sens de déplacement de balayage secondaire, qui est un sens prédéterminé dans la direction de balayage secondaire ; et
amener le rouleau (302) à se déplacer par rapport à la plate-forme (16) dans le sens de déplacement de balayage secondaire conjointement avec la tête à jet d'encre (200) pendant l'opération de balayage secondaire,
dans lequel le rouleau (302) comprend une première extrémité située sur une extrémité avant dans le sens de déplacement de balayage secondaire et une seconde extrémité située sur une extrémité arrière dans le sens de déplacement de balayage secondaire, et le rouleau (302) est disposé de manière inclinée de sorte que la hauteur dans la direction de dépôt de la seconde extrémité de l'extrémité arrière soit supérieure à la hauteur dans la direction de dépôt de la première extrémité de l'extrémité avant.
